# EUROPEAN PATENT SPECIFICATION

(11) **EP 3 569 738 B1**
(45) Date of publication and mention of the grant of the patent: **01.04.2020**
(21) Application number: 18173312.2
(22) Date of filing: 18.05.2018
(51) Int. Cl.: C25B 1/10, C25B 1/13, C25B 9/08, C25B 15/08, C02F 1/461, C02F 1/467

(54) **HYDROGEN MOLECULE REMIXING DEVICE OF DISH-SHAPED ELECTROLYTIC CELL**
WASSERSTOFFMOLEKÜLMISCHVORRICHTUNG VON SCHALENFÖRMIGER ELEKTROLYSEZELLE
DISPOSITIF DE REMIXAGE DE MOLÉCULES D'HYDROGÈNE DE PILE ÉLECTROLYTIQUE EN FORME D'ASSIETTE

(43) Date of publication of application: 20.11.2019
(73) Proprietor: Shyu, Wen-Shîng, Taichung City (TW)
(72) Inventor: Shyu, Wen-Shîng, Taichung City (TW)
(74) Representative: Patentanwälte Hosenthien-Held und Dr. Held

(56) References cited:
- CN-A- 106 365 260
- TW-A- 200 909 612
- US-A- 6 056 858
- US-A1- 2011 008 736
- US-A1- 2012 031 754
- US-A1- 2018 037 480

## Description

The present invention relates to a remixing device and, more particularly, to a hydrogen molecule remixing device of a dish-shaped electrolytic cell.

An electrolyzing device is used to electrolyze water. In practice, the source water is electrolyzed in the anode to form oxygen molecules, ozone and anionic water, and is electrolyzed in the cathode to form hydrogen molecules (or negative hydrogen ions) and cationic water. However, the hydrogen molecules are not dissolved in the water easily.

A first conventional electrolyzing device comprises circular, rectangular or net-shaped electrodes. The cationic water flow channels are arranged on the surface of the cathode, and the anionic water flow channels are arranged on the surface of the anode, so that multiple recessed portions are formed in the electrodes, thereby forming a stagnation zone. Thus, the hydrogen molecules easily gather in the stagnation zone and form larger bubbles, so that the hydrogen molecules cannot be dissolved in the cationic water, thereby decreasing the contents of the hydrogen molecules in the cationic water.

A second conventional electrolyzing device comprises a static hydrogen water electrolytic cup. The anode has a lower portion formed with an anode chamber, and the cathode has an upper portion formed with a cathode chamber. An ion membrane is placed between the anode chamber and the cathode chamber and is provided with multiple holes. The hydrogen molecules are gathered above the cathode and form gas bubbles which are lifted rapidly above the electrolytic cup, so that the hydrogen molecules produced in the cathode are not exactly dissolved in the cationic water, thereby decreasing the contents of the hydrogen molecules in the cationic water. In addition, the oxygen molecules produced under the anode cannot be introduced smoothly so that the oxygen molecules easily stay in the cavities under the anode, thereby increasing the impedance of the electrodes. Further, the electrolyzing liquid is introduced from the cup above the cathode through the holes into the anode chamber. The holes extend through the anode chamber and cathode chamber. However, when the holes are too small, the electrolyzing liquid is not easily introduced into the anode chamber, and when the holes are too large, the oxygen molecules, ozone are easily introduced into the cationic water, thereby causing pollution. Further, the ion membrane has to be wet fully for operation, so that the ion membrane needs to rest when the electrolysis process is operated during a determined period of time.

A third conventional electrolyzing device comprises a low water electrolytic cell whose electrodes are arranged in an upright manner. The electrodes are respectively located at the left side and right side of the electrolytic cell. The electrolytic cell has a lower end provided with a water inlet port and an upper end provided with a water outlet port, so that the water flows from bottom to top. However, the hydrogen molecules in the cathode chamber are rapidly carried upward by the cationic water. Thus, the cationic water is introduced outward from the electrolytic cell and is delivered into gas chamber to enhance the contents of the hydrogen molecules. However, the gas chamber occupies a larger space and increases the cost.

The closest prior art references were disclosed in D1: US-2012/031754, D2: TW-200 909 612, D3: US-6 056 858, D4: US-2011/008736, D5: US-2018/037480 and D6: CN-106 365 260. Each of D1 and D2 disclosed a method comprising: guiding source water respectively through first water inlet ports of an anode and second water inlet ports of a cathode into anode cavities of the anode and cathode cavities of the cathode; electrolyzing the source water in the anode cavities of the anode to form oxygen molecules, ozone and anionic water, and electrolyzing the source water in the cathode cavities of the cathode to form hydrogen molecules and cationic water; providing an ion membrane between the anode and the cathode to prevent the oxygen molecules from being mixed in the cationic water; guiding the anionic water carrying the oxygen molecules and ozone from the anode cavities of the anode into a first collecting and guiding chamber of a first gas and water channelling disc; and guiding the cationic water carrying the hydrogen molecules from the cathode cavities of the cathode into second collecting and guiding chambers of a second gas and water channelling disc. Each of D3, D4, D5 and D6 disclosed a blending reaction in the second collecting and guiding chambers to force more hydrogen molecules to be dissolved again into the cationic water, to increase a concentration of the hydrogen molecules in the cationic water.

The primary objective of the present invention is to provide a hydrogen molecule remixing device that efficiently enhances concentration of the hydrogen molecules in the water.

In accordance with the present invention, there is provided a hydrogen molecule remixing method comprising:
guiding source water respectively through first water inlet ports of an anode and second water inlet ports of a cathode into anode cavities of the anode and cathode cavities of the cathode;
electrolyzing the source water in the anode cavities of the anode to form oxygen molecules, ozone and anionic water, and electrolyzing the source water in the cathode cavities of the cathode to form hydrogen molecules and cationic water;
providing an ion membrane between the anode and the cathode to prevent the oxygen molecules from being mixed in the cationic water;
guiding the anionic water carrying the oxygen molecules and ozone from the anode cavities of the anode into a first collecting and guiding chamber of a first gas and water channelling disc; and
guiding the cationic water carrying the hydrogen molecules from the cathode cavities of the cathode into second collecting and guiding chambers of a second gas and water channelling disc, with the hydrogen molecules and the cationic water producing a blending reaction in the second collecting and guiding chambers, forcing more hydrogen molecules to be dissolved again into the cationic water, to increase a concentration of the hydrogen molecules in the cationic water.

In accordance with the present invention, there is further provided a hydrogen molecule remixing device comprising a base, a first gas and water channelling disc located above the base, an anode located above the first gas and water channelling disc, a cathode located above the anode, an ion membrane located between the anode and the cathode, a second gas and water channelling disc located above the cathode, a cover combined with the base and located above the second gas and water channelling disc, a cationic water outlet connector extending upward from the cover, and a connector extending downward from the base. The first gas and water channelling disc is provided with a first collecting and guiding chamber corresponding to the base. The second gas and water channelling disc is provided with a plurality of second collecting and guiding chambers corresponding to the cover. The anode is provided with a plurality of first water inlet ports and a plurality of anode cavities. The anode cavities are arranged in a radiating manner. The cathode is provided with a plurality of second water inlet ports and a plurality of cathode cavities. The cathode cavities are arranged in a radiating manner. The connector is provided with a source water input joint and an anionic water output joint. In practice, the device is adapted to: guide source water respectively through the first water inlet ports of the anode and the second water inlet ports of the cathode into the anode cavities of the anode and the cathode cavities of the cathode; electrolyze the source water in the anode cavities of the anode to form oxygen molecules, ozone and anionic water, and in the cathode cavities of the cathode to form hydrogen molecules and cationic water; carry the oxygen molecules and ozone in the anode cavities of the anode by the anionic water into the first collecting and guiding chamber of the first gas and water channelling disc; and carry the hydrogen molecules in the cathode cavities of the cathode by the cationic water into the second collecting and guiding chambers of the second gas and water channelling disc, so that the hydrogen molecules and the cationic water produce a blending reaction in the second collecting and guiding chambers, and more hydrogen molecules are dissolved into the cationic water, to increase a concentration of the hydrogen molecules in the cationic water. The cover is provided with a plurality of first stop flanges forming a plurality of hydrogen dissolving chambers in the cover. The second gas and water channelling disc is provided with a plurality of second stop flanges forming the second collecting and guiding chambers in the second gas and water channelling disc. Each of the first stop flanges of the cover is provided with a plurality of first openings to collect the hydrogen molecules and guide the cationic water. Each of the second stop flanges of the second gas and water channelling disc is provided with a plurality of second openings to collect the hydrogen molecules and guide the cationic water. The device is adapted to move the cationic water upward and downward in the second collecting and guiding chambers of the second gas and water channelling disc and the hydrogen dissolving chambers of the cover to present a successive S-shaped flow.

In the drawings:
FIG. 1 is a bottom perspective view of a hydrogen molecule remixing device in accordance with the preferred embodiment of the present invention.
FIG. 2 is a perspective cross-sectional view of the hydrogen molecule remixing device in accordance with the preferred embodiment of the present invention.
FIG. 3 is a partially perspective cross-sectional view of the hydrogen molecule remixing device in accordance with the preferred embodiment of the present invention.
FIG. 4 includes an exploded perspective view, and locally enlarged views taken along circles "A", "K" and "G", of the hydrogen molecule remixing device in accordance with the preferred embodiment of the present invention.
FIG. 5 includes an exploded perspective view and a locally enlarged view taken along circle "S", of the hydrogen molecule remixing device in accordance with the preferred embodiment of the present invention.
FIG. 6 is a cross-sectional view of the hydrogen molecule remixing device in accordance with the preferred embodiment of the present invention.
FIG. 7 includes a cross-sectional view, and locally enlarged views taken along circles "C" and "Y", of the hydrogen molecule remixing device in accordance with the preferred embodiment of the present invention.
FIG. 8 is a cross-sectional view of the hydrogen molecule remixing device taken along line E-E as shown in FIG. 7.
FIG. 9 is another cross-sectional view of the hydrogen molecule remixing device in accordance with the preferred embodiment of the present invention.
FIG. 10 is a cross-sectional view of the hydrogen molecule remixing device taken along line J-J as shown in FIG. 9.
FIG. 11 is a cross-sectional view of the hydrogen molecule remixing device taken along line F-F as shown in FIG. 9.
FIG. 12 is a cross-sectional view of the hydrogen molecule remixing device taken along line R-R as shown in FIG. 9.
FIG. 13 is an exploded perspective view of a hydrogen molecule remixing device in accordance with another preferred embodiment of the present invention.
FIG. 14 includes a cross-sectional view, and a locally enlarged view taken along circle "H", of the hydrogen molecule remixing device in accordance with another preferred embodiment of the present invention.

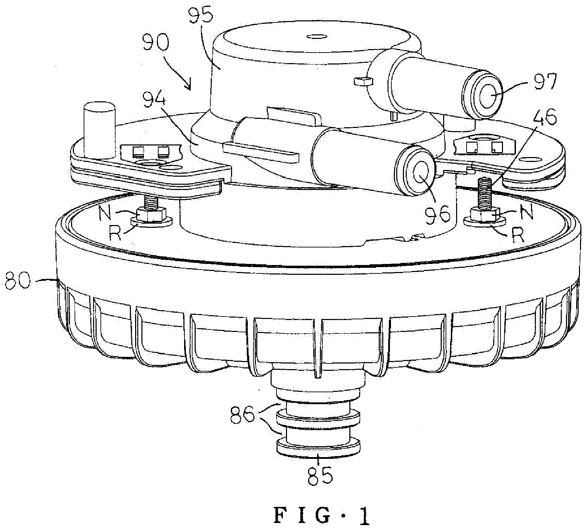

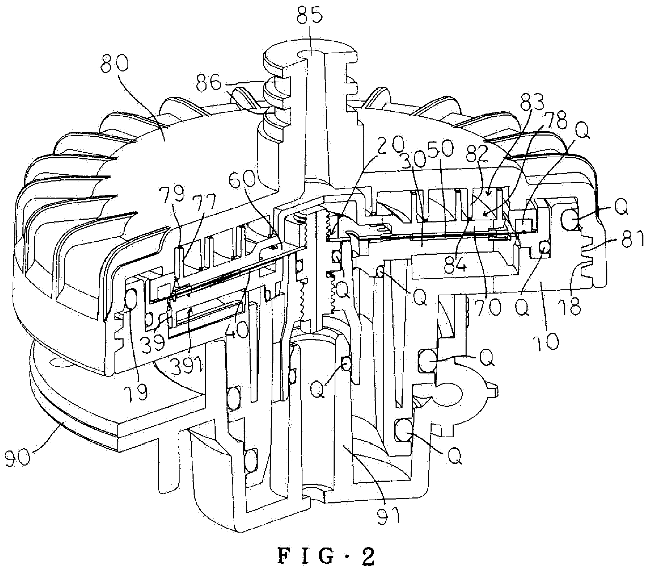

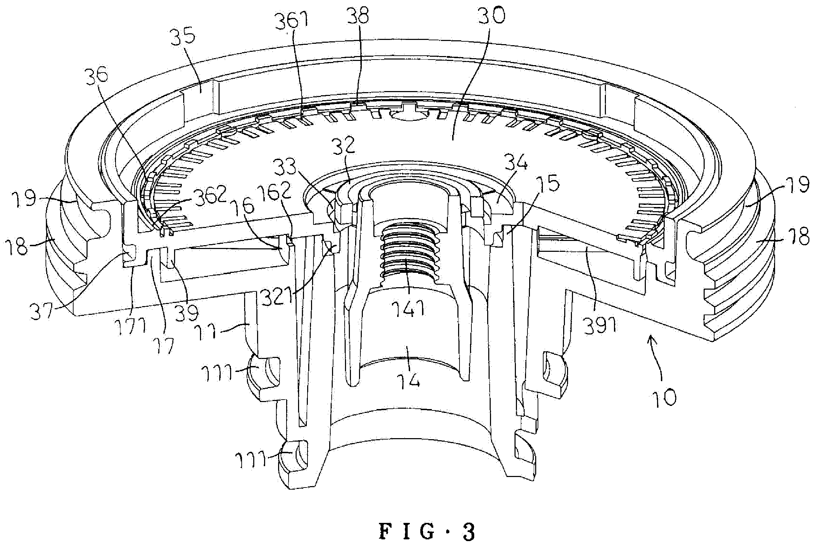

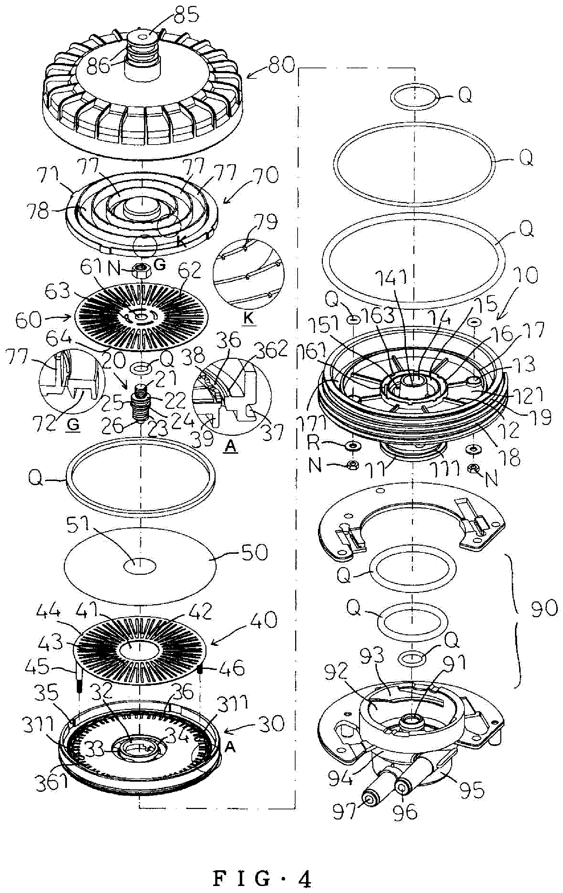

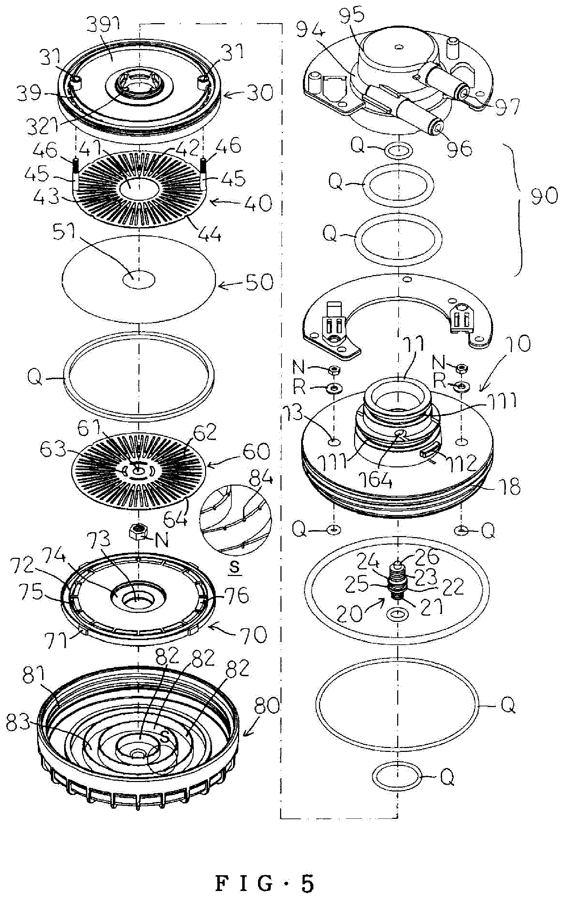

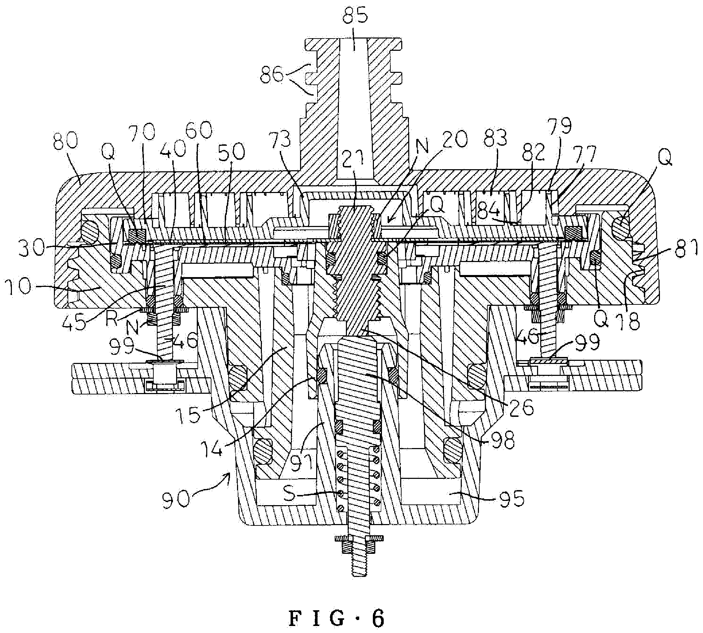

Referring to the drawings and initially to FIGS. 1-6, a hydrogen molecule remixing device in accordance with the preferred embodiment of the present invention comprises a base 10, a first gas and water channelling disc 30 located above the base 10, an anode 40 located above the first gas and water channelling disc 30, a cathode 60 located above the anode 40, an ion membrane 50 located between the anode 40 and the cathode 60, a second gas and water channelling disc 70 located above the cathode 60, a cover 80 combined with the base 10 and located above the second gas and water channelling disc 70, a cationic water outlet connector 85 extending upward from the cover 80, and a connector 90 extending downward from the base 10.

The base 10 and the cover 80 have a disk shape. The first gas and water channelling disc 30, the anode 40, the ion membrane 50, the cathode 60 and the second gas and water channelling disc 70 are arranged between the base 10 and the cover 80.

The first gas and water channelling disc 30 has a disk shape and is provided with a first collecting and guiding chamber 391 corresponding to the base 10.

The second gas and water channelling disc 70 has a disk shape and is provided with a plurality of second collecting and guiding chambers 78 corresponding to the cover 80.

The anode 40 has a disk shape and is provided with a plurality of first water inlet ports 43 and a plurality of anode cavities 42. The anode cavities 42 are arranged in a radiating manner. The source water is guided through the first water inlet ports 43 into the anode cavities 42 of the anode 40.

The cathode 60 has a disk shape and is provided with a plurality of second water inlet ports 63 and a plurality of cathode cavities 62. The cathode cavities 62 are arranged in a radiating manner. The shape, size and position of the cathode cavities 62 of the cathode 60 are the same as that of the anode cavities 42 of the anode 40. The source water is guided through the second water inlet ports 63 into the cathode cavities 62 of the cathode 60.

The connector 90 is provided with a source water input joint 97 and an anionic water output joint 96. The connector 90 includes a source water inlet chamber 95 and an anionic water exit chamber 94. The source water inlet chamber 95 has a diameter smaller than that of the anionic water exit chamber 94. The source water input joint 97 is connected to and protrudes from the source water inlet chamber 95, and the anionic water output joint 96 is connected to and protrudes from the anionic water exit chamber 94. The anionic water output joint 96 is connected with a anionic water outlet hose (not shown).

In practice, the source water is respectively guided through the first water inlet ports 43 of the anode 40 and the second water inlet ports 63 of the cathode 60 into the anode cavities 42 of the anode 40 and the cathode cavities 62 of the cathode 60. The source water is a solution that has not been electrolyzed. The source water is electrolyzed in the anode cavities 42 of the anode 40 to form oxygen molecules, ozone and anionic water, and is electrolyzed in the cathode cavities 62 of the cathode 60 to form hydrogen molecules and cationic water. The oxygen molecules and ozone in the anode cavities 42 of the anode 40 are carried by the anionic water into the first collecting and guiding chamber 391 of the first gas and water channelling disc 30. The hydrogen molecules in the cathode cavities 62 of the cathode 60 are carried by the cationic water into the second collecting and guiding chambers 78 of the second gas and water channelling disc 70, so that the hydrogen molecules and the cationic water produce a blending reaction in the second collecting and guiding chambers 78, and more hydrogen molecules are dissolved into the cationic water, to increase the concentration of the hydrogen molecules in the cationic water.

In the preferred embodiment of the present invention, polarities of the anode 40 and the cathode 60 are interchanged.

In the preferred embodiment of the present invention, the base 10 has a top provided with a plurality of partitions 12 which are arranged in a radiating manner, and a plurality of anionic water flow paths 121 located between the partitions 12. The base 10 is provided with a conductive spacing tube 14, a first spacing ring 15 surrounding the conductive spacing tube 14, and a second spacing ring 16 surrounding the first spacing ring 15. The base 10 is provided with a plurality of first spacing ribs 151 located between the first spacing ring 15 and the conductive spacing tube 14 and forming a plurality of source water inlet paths 152 in the first spacing ring 15, and a plurality of second spacing ribs 161 located between the second spacing ring 16 and the first spacing ring 15 and forming a plurality of anionic water outlet paths 162 in the second spacing ring 16. The second spacing ring 16 is provided with a plurality of anionic water outlet ports 163 corresponding to the anionic water flow paths 121. The anionic water outlet paths 162 have a bottom provided with a plurality of anionic water outlet holes 164.

In the preferred embodiment of the present invention, the top of the base 10 is provided with an annular flange 17 surrounding the partitions 12, and a connecting groove 171 is formed between an inner wall of the base 10 and the annular flange 17 for connecting the first gas and water channelling disc 30. The first gas and water channelling disc 30 has an outer wall provided with an annular groove 37 corresponding to the connecting groove 171 of the base 10, and an O-ring "Q" is compressed between the connecting groove 171 of the base 10 and the annular groove 37 of the first gas and water channelling disc 30, to prevent the cationic water and the anionic water from being mixed.

In the preferred embodiment of the present invention, the base 10 is provided with a mounting protrusion 11 extending downward for mounting the connector 90. The mounting protrusion 11 of the base 10 is provided with at least one tenon 112. The connector 90 is provided with a mounting recess 92 mounted on the mounting protrusion 11 of the base 10. The mounting recess 92 of the connector 90 is provided with at least one mortise 93 locked onto the tenon 112 of the mounting protrusion 11 by rotation, so that the connector 90 is locked onto or unlocked from the base 10 quickly. The mounting protrusion 11 of the base 10 is provided with two grooves 111 for mounting two O-rings "Q". The anionic water outlet holes 164 correspond to a periphery of the mounting protrusion 11.

In the preferred embodiment of the present invention, the base 10 is provided with an external thread 18, and the cover 80 is provided with an internal thread 81 screwed onto the external thread 18 of the base 10. The base 10 is provided with an annular groove 19 located above the external thread 18, and an O-ring "Q" is retained in the annular groove 19 of the base 10 and compressed between the base 10 and the cover 80.

In the preferred embodiment of the present invention, the anode 40 has a periphery provided with a plurality of first positioning portions 44, and the cathode 60 has a periphery provided with a plurality of second positioning portions 64 located on the first positioning portions 44 of the anode 40 to align the anode cavities 42 of the anode 40 with the cathode cavities 62 of the cathode 60, so that the anode 40 aligns with the cathode 60.

In the preferred embodiment of the present invention, the cover 80 is provided with a plurality of first stop flanges 82 forming a plurality of hydrogen dissolving chambers 83 in the cover 80, and the second gas and water channelling disc 70 is provided with a plurality of second stop flanges 77 forming the second collecting and guiding chambers 78 in the second gas and water channelling disc 70. The first stop flanges 82 of the cover 80 and the second stop flanges 77 of the second gas and water channelling disc 70 have an annular shape and are arranged alternatingly. Each of the first stop flanges 82 of the cover 80 is provided with a plurality of first openings 84 to collect the hydrogen molecules and guide the cationic water, and each of the second stop flanges 77 of the second gas and water channelling disc 70 is provided with a plurality of second openings 79 to collect the hydrogen molecules and guide the cationic water, so as to rapidly receive the hydrogen molecules produced by the cathode 60. In such a manner, the cationic water is moved upward and downward in the second collecting and guiding chambers 78 of the second gas and water channelling disc 70 and the hydrogen dissolving chambers 83 of the cover 80 to present a successive S-shaped flow. Thus, the hydrogen molecules are lifted, and the cationic water is lowered to produce a blending reaction, so that more hydrogen molecules are dissolved into the cationic water.

In the preferred embodiment of the present invention, the ion membrane 50 is a proton exchange film and has a diameter greater than that of the anode 40 and that of the cathode 60. The first gas and water channelling disc 30 is provided with a protruding ring 362, the second gas and water channelling disc 70 is provided with a slot 72 mounted on the protruding ring 362 of the first gas and water channelling disc 30, and an O-ring "Q" is compressed between the protruding ring 362 of the first gas and water channelling disc 30 and the slot 72 of the second gas and water channelling disc 70, so that the ion membrane 50 is compressed by the protruding ring 362 of the first gas and water channelling disc 30 and the O-ring "Q", so as to stop a water flow, thereby preventing the cationic water and the anionic water from being mixed.

In the preferred embodiment of the present invention, the first gas and water channelling disc 30 has a periphery provided with a plurality of locating slots 35, and the second gas and water channelling disc 70 has a periphery provided with a plurality of locating inserts 71 inserted into the locating slots 35 of the first gas and water channelling disc 30, so that the second gas and water channelling disc 70 is positioned on the first gas and water channelling disc 30.

In the preferred embodiment of the present invention, an electric conductor 20 is mounted on the cathode 60 and connected with the base 10. The electric conductor 20 has a lower end provided with a conducting portion 26 locked in the conductive spacing tube 14 of the base 10. The base 10 is provided with two through holes 13, and the anode 40 is provided with two positive conducting portions 45 extending through the two through holes 13 of the base 10 and locked by two washers "R" and two nuts "N". Each of the two positive conducting portions 45 of the anode 40 is provided with an outer thread 46 extending through one of the two washers "R" and screwed by one of the two nuts "N". The connector 90 is provided with a hollow pillar 91 corresponding to the conductive spacing tube 14 of the base 10, a negative conducting shaft 98 is movably mounted in the hollow pillar 91 and connected to a negative wire (not shown), and an elastic member "S" is mounted in the hollow pillar 91 and biased between the hollow pillar 91 and the negative conducting shaft 98 to push the negative conducting shaft 98 to closely contact the conducting portion 26 of the electric conductor 20. The connector 90 is provided with two elastic positive conducting blades 99 corresponding to and closely contacting the two positive conducting portions 45 of the anode 40 and connected to a positive wire (not shown).

In the preferred embodiment of the present invention, the anode cavities 42 of the anode 40 and the cathode cavities 62 of the cathode 60 have a V-shaped configuration.

In the preferred embodiment of the present invention, the first gas and water channelling disc 30 is provided with a first source water inlet passage 34 corresponding to the first water inlet ports 43 of the anode 40, and the second gas and water channelling disc 70 is provided with a second source water inlet passage 74 corresponding to the second water inlet ports 63 of the cathode 60. The first gas and water channelling disc 30 is provided with a plurality of anionic water outlet ports 36 and a plurality of anionic water outlet channels 361, and the second gas and water channelling disc 70 is provided with a plurality of cationic water outlet ports 75 and a plurality of cationic water outlet channels 76. The source water flows through the first water inlet ports 43 of the anode 40 into the first source water inlet passage 34 of the first gas and water channelling disc 30, and flows from the first water inlet ports 43 of the anode 40 into the anode cavities 42 of the anode 40 in a radiating manner, and finally flows out of the anionic water outlet channels 361 and the anionic water outlet ports 36 of the first gas and water channelling disc 30. The source water also flows through the second water inlet ports 63 of the cathode 60 into the second source water inlet passage 74 of the second gas and water channelling disc 70, and flows outward from the second water inlet ports 63 of the cathode 60 into the cathode cavities 62 of the cathode 60 in a radiating manner, and finally flows out of the cationic water outlet channels 76 and the cationic water outlet ports 75 of the second gas and water channelling disc 70.

In the preferred embodiment of the present invention, the first gas and water channelling disc 30 is provided with an annular stop edge 39 corresponding to the base 10 and forming the collecting and guiding space 391 between the base 10 and the first gas and water channelling disc 30, to collect the oxygen molecules and ozone and guide the anionic water, so as to rapidly receive the oxygen molecules and ozone produced by the anode 40, thereby preventing the oxygen molecules and ozone from being mixed with the cationic water.

In the preferred embodiment of the present invention, the first gas and water channelling disc 30 is provided with an annular projection 38 corresponding to the anionic water outlet ports 36 to lift a level of the anionic water, so that the ion membrane 50 is wet fully.

In the preferred embodiment of the present invention, the conductive spacing tube 14 of the base 10 is provided with an internal thread 141, and the lower end of the electric conductor 20 is provided with a lower stepped edge 24 located in the conductive spacing tube 14 of the base 10 and an external thread 23 screwed into the internal thread 141 of the conductive spacing tube 14. The cathode 60 has a center provided with a shaft hole 61, with the second water inlet ports 63 being located between the shaft hole 61 and the cathode cavities 62. The electric conductor 20 has an upper end provided with an upper stepped edge 22 resting on the cathode 60 and an outer thread 21 extending through an O-ring "Q" and the shaft hole 61 of the cathode 60, and a nut "N" is screwed onto the outer thread 21 of the electric conductor 20 to lock the cathode 60 onto the electric conductor 20. The electric conductor 20 is provided with an annular groove 25 located between the upper stepped edge 22 and the lower stepped edge 24, and an O-ring "Q" is retained in the annular groove 25 of the electric conductor 20 and compressed between the conductive spacing tube 14 of the base 10 and the electric conductor 20. The second gas and water channelling disc 70 has a bottom provided with a receiving recess 73 for receiving the nut "N" and the outer thread 21 of the electric conductor 20.

In the preferred embodiment of the present invention, the first gas and water channelling disc 30 is provided with two hollow posts 31 extending through the two through holes 13 of the base 10. Each of the two hollow posts 31 is provided with an aperture 311 allowing passage of each of the two positive conducting portions 45 of the anode 40. The aperture 311 of each of the two hollow posts 31 receives an O-ring "Q" to provide a water stop function. The first gas and water channelling disc 30 has a center provided with a spacing sleeve 32 which has an outer wall provided with a plurality of source water inlet ports 33, and the first source water inlet passage 34 are formed on a periphery of the source water inlet ports 33. Thus, the source water flows through the source water inlet ports 33 into the first source water inlet passage 34, and then flows outward from the first source water inlet passage 34 in a radiating manner. The spacing sleeve 32 of the first gas and water channelling disc 30 has a lower end provided with an annular groove 321 corresponding to the first spacing ring 15 of the base 10, and an O-ring "Q" is retained in the annular groove 321 of the first gas and water channelling disc 30.

In the preferred embodiment of the present invention, the anode 40 has a center provided with a shaft hole 41 having a diameter flush with that of the spacing sleeve 32 of the first gas and water channelling disc 30, and the ion membrane 50 has a center provided with a shaft hole 51 having a diameter flush with that of the spacing sleeve 32 of the first gas and water channelling disc 30. The hydrogen molecules permeate the ion membrane 50, and the oxygen molecules cannot permeate the ion membrane 50 during the electrolysis process, thereby preventing the oxygen molecules and ozone produced by the anode 40 from being mixed with the cationic water.

In the preferred embodiment of the present invention, the cationic water outlet connector 85 is connected with a cationic water outlet hose (not shown) so that the cationic water is delivered through the cationic water outlet connector 85 and carried outward from the cationic water outlet hose. The cationic water outlet connector 85 is provided with an annular groove 86, and an O-ring "Q" is retained in the annular groove 86 of the cationic water outlet connector 85 and compressed between the cationic water outlet connector 85 and the cationic water outlet hose.

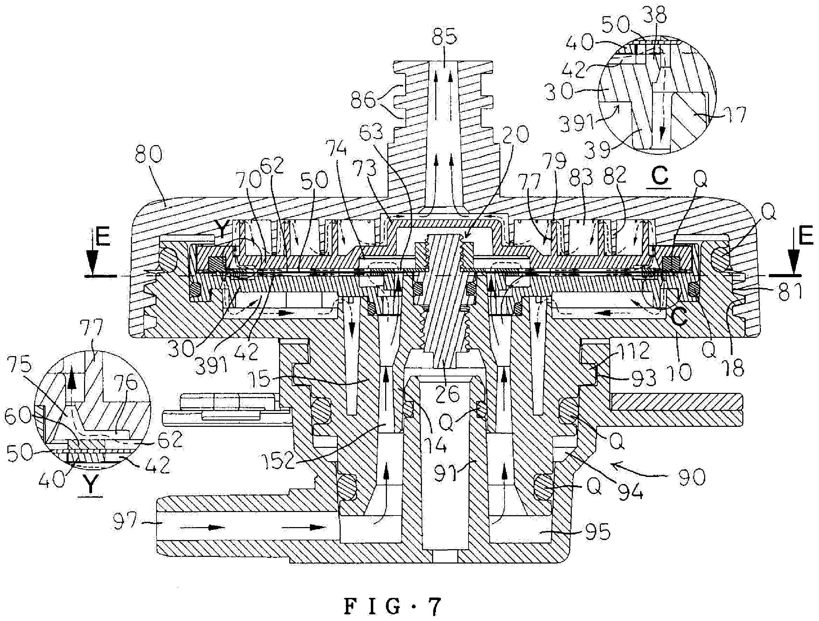

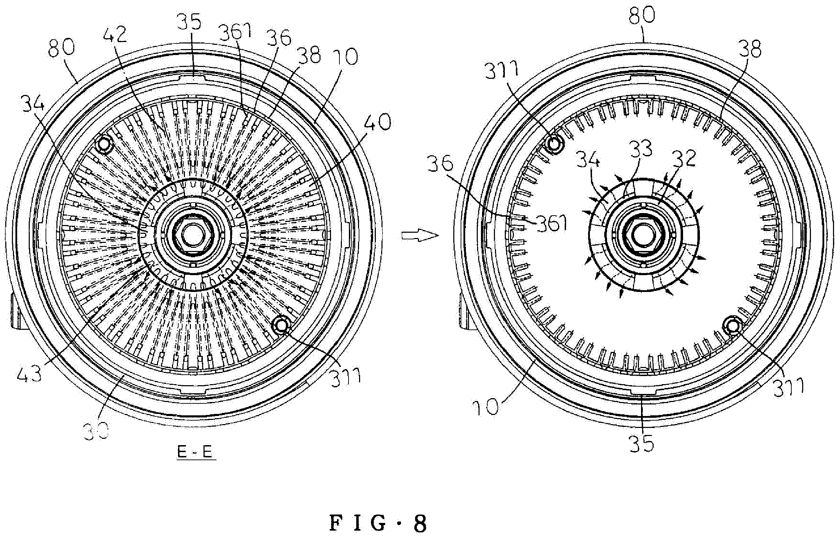

In operation, referring to FIGS. 7 and 8 with reference to FIGS. 1-6, the source water in turn flows through the source water input joint 97 and the source water inlet chamber 95 into the source water inlet paths 152 of the first spacing ring 15. Then, most of the source water flows through the second water inlet ports 63 of the cathode 60 into the second source water inlet passage 74 of the second gas and water channelling disc 70, and flows into the cathode cavities 62 of the cathode 60 in a radiating manner. At the same time, a small part of the source water flows through the source water inlet ports 33 into the first source water inlet passage 34 of the anode 40, and then flows through the first water inlet ports 43 into the anode cavities 42 of the anode 40.

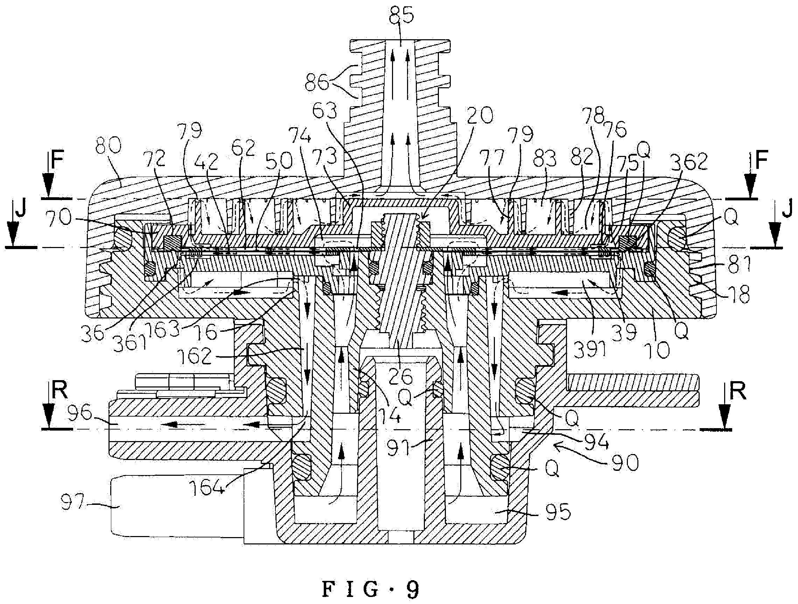

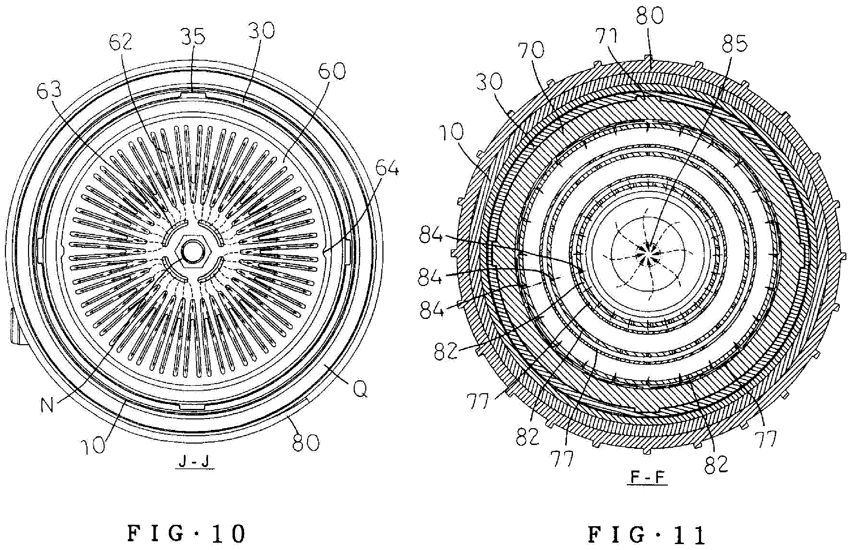

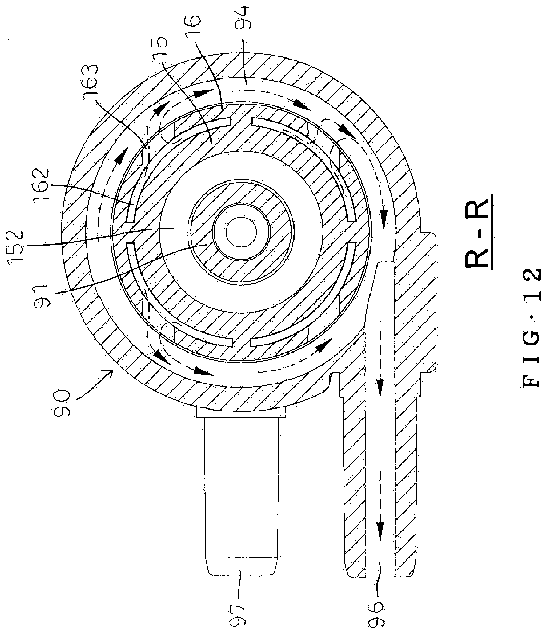

Referring to FIGS. 9-12 with reference to FIGS. 1-8, the source water is electrolyzed in the anode cavities 42 of the anode 40 to form oxygen molecules, ozone and anionic water, and is electrolyzed in the cathode cavities 62 of the cathode 60 to form hydrogen molecules and cationic water. At this time, the ion membrane 50 is located between the anode 40 and the cathode 60, so that the hydrogen molecules permeate the ion membrane 50, and the oxygen molecules cannot permeate the ion membrane 50 during the electrolysis process, thereby preventing the oxygen molecules and ozone produced by the anode 40 from being mixed with the cationic water.

The hydrogen molecules produced in the cathode cavities 62 of the cathode 60 are carried by the cationic water to flow through the cationic water outlet channels 76, the cationic water outlet ports 75 and the second openings 79 of the second stop flanges 77 into the second collecting and guiding chambers 78, so that the hydrogen molecules are collected in the hydrogen dissolving chambers 83. At the same time, the cationic water is moved upward and downward in the second collecting and guiding chambers 78 of the second gas and water channelling disc 70 and the hydrogen dissolving chambers 83 of the cover 80 to present a successive S-shaped flow. Thus, the hydrogen molecules are lifted, and the cationic water is lowered to produce a blending reaction, so that more hydrogen molecules are dissolved into the cationic water. In addition, more hydrogen molecules are forced by the pressure and dissolved again into the cationic water, thereby increasing the concentration of the hydrogen molecules in the cationic water. Finally, the cationic water containing the hydrogen molecules is delivered through the cationic water outlet connector 85 and drained outward from the cationic water outlet hose.

The oxygen molecules and ozone produced in the anode cavities 42 of the anode 40 are carried by the anionic water to flow through the anionic water outlet channels 361, the anionic water outlet ports 36 and the stop edge 39 into the first collecting and guiding chamber 391 of the first gas and water channelling disc 30, so that the oxygen molecules and ozone are collected in the first collecting and guiding chamber 391, thereby preventing the oxygen molecules and ozone from being mixed with the cationic water. Finally, the anionic water containing the oxygen molecules and ozone is delivered through the anionic water exit chamber 94 and the anionic water output joint 96 of the connector 90 and drained outward from the anionic water outlet hose. At this time, the annular projection 38 of the first gas and water channelling disc 30 lifts the level of the anionic water, so that the ion membrane 50 is wet fully.

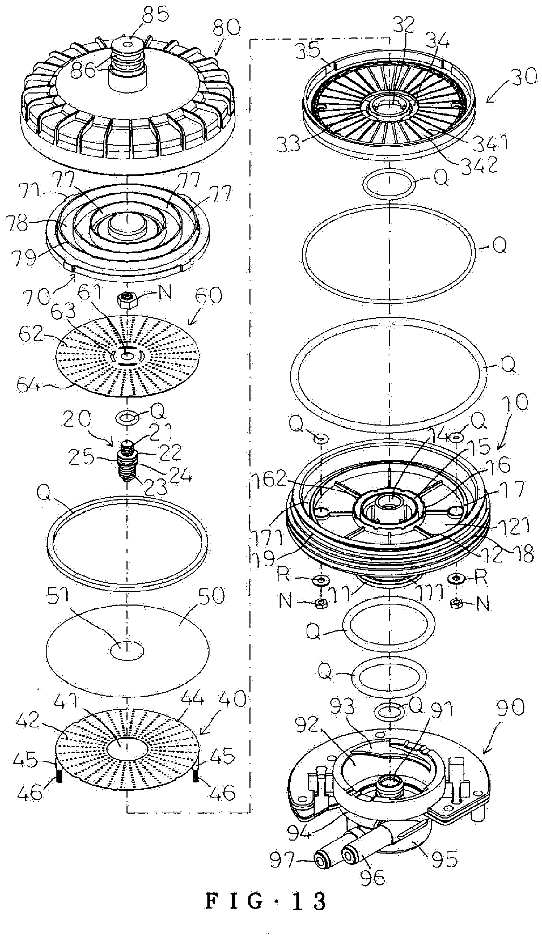

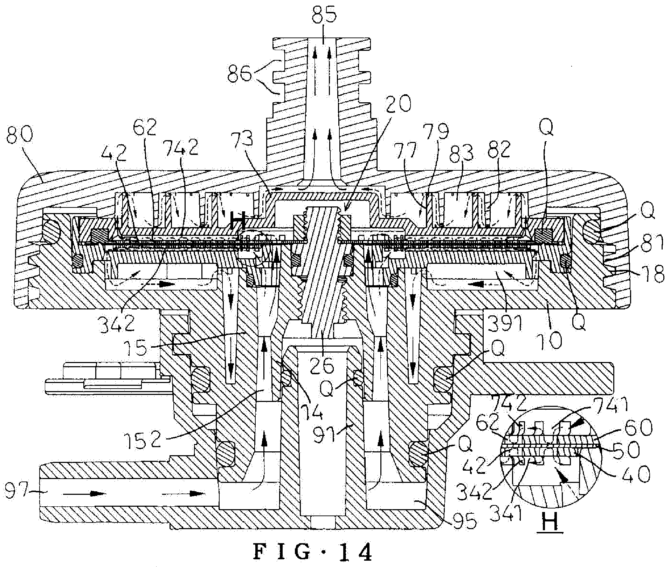

Referring to FIGS. 13 and 14, the anode cavities 42 of the anode 40 and the cathode cavities 62 of the cathode 60 include multiple holes. The first gas and water channelling disc 30 is provided with a plurality of first spacing pieces 341 corresponding to the anode cavities 42 of the anode 40, and a plurality of anionic water flow channels 342 located between the first spacing pieces 341, so that the oxygen molecules and ozone produced in the anode cavities 42 of the anode 40 are rapidly carried away by the anionic water. The first spacing pieces 341 are arranged in a radiating manner. The second gas and water channelling disc 70 is provided with a plurality of second spacing pieces 741 corresponding to the cathode cavities 62 of the cathode 60, and a plurality of cationic water flow channels 742 located between the second spacing pieces 741, so that the hydrogen molecules produced in the cathode cavities 62 of the cathode 60 are rapidly carried away by the cationic water. The second spacing pieces 741 are arranged in a radiating manner.

Accordingly, more hydrogen molecules are dissolved into the cationic water by the blending reaction in the hydrogen dissolving chambers 83 of the cover 80 and by the increased pressure, so as to increase the concentration of the hydrogen molecules in the cationic water. In addition, the cathode cavities 62 of the cathode 60 are arranged in a radiating manner to form multiple cationic water flow channels, so that the hydrogen molecules produced in the cathode cavities 62 of the cathode 60 are quickly carried away by the cationic water, thereby preventing the hydrogen molecules from producing larger gas bubbles due to a reunion phenomenon, so as to efficiently enhance the dissolved quantity (or solubility) of the hydrogen molecules. Further, the first collecting and guiding chamber 391 of the first gas and water channelling disc 30 corresponds to the anode 40 to rapidly collect the oxygen molecules and ozone produced by the anode 40, thereby preventing the oxygen molecules and ozone from being mixed with the cationic water. Further, the concentration of the hydrogen molecules in the cationic water is increased by more than 30%. Further, the hydrogen dissolving chambers 83, the first collecting and guiding chamber 391 and the second collecting and guiding chambers 78 are integrated and modularized, thereby decreasing the cost of fabrication. Further, the hydrogen molecule remixing device is assembled and disassembled quickly.

## Claims

1. A hydrogen molecule remixing device comprising:
a base (10);
a first gas and water channelling disc (30) located above the base;
an anode (40) located above the first gas and water channelling disc;
a cathode (60) located above the anode;
an ion membrane (50) located between the anode and the cathode;
a second gas and water channelling disc (70) located above the cathode;
a cover (80) combined with the base and located above the second gas and water channelling disc;
a cationic water outlet connector (85) extending upward from the cover; and
a connector (90) extending downward from the base;
wherein:
the first gas and water channelling disc is provided with a first collecting and guiding chamber (391) corresponding to the base;
the second gas and water channelling disc is provided with a plurality of second collecting and guiding chambers (78) corresponding to the cover (80);
the anode is provided with a plurality of first water inlet ports (43) and a plurality of anode cavities (42);
the anode cavities are arranged in a radiating manner;
the cathode is provided with a plurality of second water inlet ports (63) and a plurality of cathode cavities (62);
the cathode cavities are arranged in a radiating manner;
the connector is provided with a source water input joint (97) and an anionic water output joint (96);
wherein the device is adapted to:
guide source water respectively through the first water inlet ports of the anode and the second water inlet ports of the cathode into the anode cavities of the anode and the cathode cavities of the cathode;
electrolyze the source water in the anode cavities of the anode to form oxygen molecules, ozone and anionic water, and in the cathode cavities of the cathode to form hydrogen molecules and cationic water;
carry the oxygen molecules and ozone in the anode cavities of the anode by the anionic water into the first collecting and guiding chamber of the first gas and water channelling disc; and
carry the hydrogen molecules in the cathode cavities of the cathode by the cationic water into the second collecting and guiding chambers of the second gas and water channelling disc, so that the hydrogen molecules and the cationic water produce a blending reaction in the second collecting and guiding chambers, and more hydrogen molecules are dissolved into the cationic water, to increase a concentration of the hydrogen molecules in the cationic water;
further wherein:
the cover is provided with a plurality of first stop flanges (82) forming a plurality of hydrogen dissolving chambers (83) in the cover;
the second gas and water channelling disc is provided with a plurality of second stop flanges (77) forming the second collecting and guiding chambers in the second gas and water channelling disc;
each of the first stop flanges of the cover is provided with a plurality of first openings (84) to collect the hydrogen molecules and guide the cationic water;
each of the second stop flanges of the second gas and water channelling disc is provided with a plurality of second openings (79) to collect the hydrogen molecules and guide the cationic water; and
wherein the device is adapted to move the cationic water upward and downward in the second collecting and guiding chambers of the second gas and water channelling disc and the hydrogen dissolving chambers of the cover to present a successive S-shaped flow.

2. The hydrogen molecule remixing device of claim 1, wherein:
the base has a top provided with a plurality of partitions (12) which are arranged in a radiating manner, and a plurality of anionic water flow paths (121) located between the partitions;
the base is provided with a conductive spacing tube (14), a first spacing ring (15) surrounding the conductive spacing tube, and a second spacing ring (16) surrounding the first spacing ring;
the base is provided with a plurality of first spacing ribs (151) located between the first spacing ring and the conductive spacing tube and forming a plurality of source water inlet paths (152) in the first spacing ring, and a plurality of second spacing ribs (161) located between the second spacing ring and the first spacing ring and forming a plurality of anionic water outlet paths (162) in the second spacing ring;
the second spacing ring is provided with a plurality of anionic water outlet ports (163) corresponding to the anionic water flow paths; and
the anionic water outlet paths have a bottom provided with a plurality of anionic water outlet holes (164).

3. The hydrogen molecule remixing device of claim 1, wherein:
the top of the base is provided with an annular flange (17) surrounding the partitions, and a connecting groove (171) is formed between an inner wall of the base and the annular flange for connecting the first gas and water channelling disc;
the first gas and water channelling disc has an outer wall provided with an annular groove (37) corresponding to the connecting groove of the base; and
an O-ring (Q) is compressed between the connecting groove of the base and the annular groove of the first gas and water channelling disc.

4. The hydrogen molecule remixing device of claim 1, wherein:
the base is provided with a mounting protrusion (11) extending downward;
the mounting protrusion of the base is provided with at least one tenon (112);
the connector is provided with a mounting recess (92) mounted on the mounting protrusion of the base; and
the mounting recess of the connector is provided with at least one mortise (93) locked onto the tenon of the mounting protrusion.

5. The hydrogen molecule remixing device of claim 1, wherein the base is provided with an external thread (18), and the cover is provided with an internal thread (81) screwed onto the external thread of the base.

6. The hydrogen molecule remixing device of claim 1, wherein the anode has a periphery provided with a plurality of first positioning portions (44), and the cathode has a periphery provided with a plurality of second positioning portions (64) located on the first positioning portions of the anode to align the anode cavities of the anode with the cathode cavities of the cathode.

7. The hydrogen molecule remixing device of claim 1, wherein:
the ion membrane is a proton exchange film and has a diameter greater than that of the anode and that of the cathode;
the first gas and water channelling disc is provided with a protruding ring (362);
the second gas and water channelling disc is provided with a slot (72) mounted on the protruding ring of the first gas and water channelling disc; and
an O-ring is compressed between the protruding ring of the first gas and water channelling disc and the slot of the second gas and water channelling disc.

8. The hydrogen molecule remixing device of claim 1, wherein the first gas and water channelling disc has a periphery provided with a plurality of locating slots (35), and the second gas and water channelling disc has a periphery provided with a plurality of locating inserts (71) inserted into the locating slots of the first gas and water channelling disc.

9. The hydrogen molecule remixing device of claim 1, wherein:
an electric conductor (20) is mounted on the cathode and connected with the base;
the electric conductor has a lower end provided with a conducting portion (26) mounted in a conductive spacing tube (14) of the base;
the base is provided with two through holes 13;
the anode is provided with two positive conducting portions (45) extending through the two through holes of the base;
the connector is provided with a hollow pillar (91) corresponding to the conductive spacing tube of the base;
a negative conducting shaft (98) is movably mounted in the hollow pillar and connected to a negative wire;
an elastic member (S) is mounted in the hollow pillar and biased between the hollow pillar and the negative conducting shaft to push the negative conducting shaft to closely contact the conducting portion of the electric conductor; and
the connector is provided with two elastic positive conducting blades (99) corresponding to the two positive conducting portions of the anode and connected to a positive wire.

10. The hydrogen molecule remixing device of claim 1, wherein the anode cavities of the anode and the cathode cavities of the cathode have a V-shaped configuration.

11. The hydrogen molecule remixing device of claim 1, wherein:
the anode cavities of the anode and the cathode cavities of the cathode include multiple holes;
the first gas and water channelling disc is provided with a plurality of first spacing pieces (341) corresponding to the anode cavities of the anode, and a plurality of anionic water flow channels (342) located between the first spacing pieces;
the first spacing pieces are arranged in a radiating manner;
the second gas and water channelling disc is provided with a plurality of second spacing pieces (741) corresponding to the cathode cavities of the cathode, and a plurality of cationic water flow channels (742) located between the second spacing pieces; and
the second spacing pieces are arranged in a radiating manner.

12. The hydrogen molecule remixing device of claim 1, wherein:
the first gas and water channelling disc is provided with a first source water inlet passage (34) corresponding to the first water inlet ports of the anode;
the second gas and water channelling disc is provided with a second source water inlet passage (74) corresponding to the second water inlet ports of the cathode;
the first gas and water channelling disc is provided with a plurality of anionic water outlet ports (36) and a plurality of anionic water outlet channels (361);
the second gas and water channelling disc is provided with a plurality of cationic water outlet ports (75) and a plurality of cationic water outlet channels (76);
wherein the device is adapted such that:
the source water flows through the first water inlet ports of the anode into the first source water inlet passage of the first gas and water channelling disc, and flows from the first water inlet ports of the anode into the anode cavities of the anode in a radiating manner, and finally flows out of the anionic water outlet channels and the anionic water outlet ports of the first gas and water channelling disc; and
the source water flows through the second water inlet ports of the cathode into the second source water inlet passage of the second gas and water channelling disc, and flows outward from the second water inlet ports of the cathode into the cathode cavities of the cathode in a radiating manner, and finally flows out of the cationic water outlet channels and the cationic water outlet ports of the second gas and water channelling disc.

13. The hydrogen molecule remixing device of claim 12, wherein the first gas and water channelling disc is provided with an annular stop edge (39) corresponding to the base and forming the collecting and guiding space between the base and the first gas and water channelling disc, to collect the oxygen molecules and ozone and guide the anionic water.

14. The hydrogen molecule remixing device of claim 12, wherein the first gas and water channelling disc is provided with an annular projection (38) corresponding to the anionic water outlet ports.

15. A hydrogen molecule remixing method comprising:
guiding source water respectively through first water inlet ports of an anode and second water inlet ports of a cathode into anode cavities of the anode and cathode cavities of the cathode;
electrolyzing the source water in the anode cavities of the anode to form oxygen molecules, ozone and anionic water, and electrolyzing the source water in the cathode cavities of the cathode to form hydrogen molecules and cationic water;
providing an ion membrane between the anode and the cathode to prevent the oxygen molecules from being mixed in the cationic water;
guiding the anionic water carrying the oxygen molecules and ozone from the anode cavities of the anode into a first collecting and guiding chamber of a first gas and water channelling disc; and
guiding the cationic water carrying the hydrogen molecules from the cathode cavities of the cathode into second collecting and guiding chambers of a second gas and water channelling disc, with the hydrogen molecules and the cationic water producing a blending reaction in the second collecting and guiding chambers, forcing more hydrogen molecules to be dissolved again into the cationic water, to increase a concentration of the hydrogen molecules in the cationic water;
wherein the method is carried out in the device of any of claims 1 to 14.

## Patentansprüche

1. Vorrichtung zum Vermischen von Wasserstoffmolekülen, aufweisend:
eine Basis (10);
eine erste Gas- und Wasserleitscheibe (30), die über der Basis angeordnet ist;
eine Anode (40), die über der ersten Gas- und Wasserleitscheibe angeordnet ist;
eine Kathode (60), die über der Anode angeordnet ist;
eine lonenmembran (50), die zwischen der Anode und der Kathode angeordnet ist;
eine zweite Gas- und Wasserleitscheibe (70), die über der Kathode angeordnet ist;
eine Abdeckung (80), die mit der Basis kombiniert ist und sich über der zweiten Gas-und Wasserleitscheibe befindet;
einen kationischen Wasserauslassverbinder (85), der sich von der Abdeckung nach oben erstreckt; und
einen Verbinder (90), der sich von der Basis nach unten erstreckt;
wobei:
die erste Gas- und Wasserleitscheibe mit einer ersten Sammel- und Führungskammer (391) versehen ist, die der Basis entspricht;
die zweite Gas- und Wasserleitscheibe mit einer Mehrzahl von zweiten Sammel- und Führungskammern (78) versehen ist, die der Abdeckung (80) entsprechen;
die Anode mit einer Mehrzahl von ersten Wassereinlassöffnungen (43) und einer Mehrzahl von Anodenhohlräumen (42) versehen ist;
die Anodenhohlräume strahlenförmig angeordnet sind;
die Kathode mit einer Mehrzahl von zweiten Wassereinlassöffnungen (63) und einer Mehrzahl von Kathodenhohlräumen (62) versehen ist;
die Kathodenhohlräume strahlenförmig angeordnet sind;
der Verbinder mit einer Wasserzufuhreingangsverbindung (97) und einer anionischen Wasserausgangsverbindung (96) versehen ist;
wobei die Vorrichtung dazu geeignet ist:
Transportieren des zugeführten Wassers jeweils durch die ersten Wassereinlassöffnungen der Anode und die zweiten Wassereinlassöffnungen der Kathode in die Anodenhohlräume der Anode und die Kathodenhohlräume der Kathode;
Elektrolysieren des zugeführten Wassers in den Anodenhohlräumen der Anode, um Sauerstoffmoleküle, Ozon und anionisches Wasser zu bilden, und in den Kathodenhohlräumen der Kathode, um Wasserstoffmoleküle und kationisches Wasser zu bilden;
Transportieren der Sauerstoffmoleküle und des Ozons in den Anodenhohlräumen der Anode durch das anionische Wasser in die erste Sammel- und Leitkammer der ersten Gas- und Wasserleitscheibe; und
Transportieren der Wasserstoffmoleküle in den Kathodenhohlräumen der Kathode durch das kationische Wasser in die zweiten Sammel- und Leitkammern der zweiten Gas- und Wasserleitscheibe, so dass die Wasserstoffmoleküle und das kationische Wasser in den zweiten Sammel- und Leitkammern eine Mischreaktion hervorrufen,
und mehr Wasserstoffmoleküle in dem kationischen Wasser gelöst werden, um eine Konzentration der Wasserstoffmoleküle in dem kationischen Wasser zu erhöhen;
wobei ferner:
die Abdeckung mit mehreren ersten Anschlagflanschen (82) versehen ist, die eine Mehrzahl von Wasserstoffauflösungskammern (83) in der Abdeckung bilden;
die zweite Gas- und Wasserleitscheibe mit mehreren zweiten Anschlagflanschen (77) versehen ist, welche die zweiten Sammel- und Führungskammern in der zweiten Gas- und Wasserleitscheibe bilden;
jeder der ersten Anschlagflansche der Abdeckung mit einer Mehrzahl von ersten Öffnungen (84) versehen ist, um die Wasserstoffmoleküle zu sammeln und das kationische Wasser zu führen;
wobei jeder der zweiten Anschlagflansche der zweiten Gas- und Wasserleitscheibe mit einer Mehrzahl von zweiten Öffnungen (79) versehen ist, um die Wasserstoffmoleküle zu sammeln und das kationische Wasser zu führen; und
wobei die Vorrichtung dazu geeignet ist, das kationische Wasser in den zweiten Sammel- und Führungskammern der zweiten Gas- und Wasserleitscheibe und den Wasserstofflösungskammern der Abdeckung auf und ab zu bewegen, um eine aufeinanderfolgende S-förmige Strömung zu bilden.

2. Vorrichtung zum Vermischen von Wasserstoffmolekülen nach Anspruch 1, wobei:
die Basis eine Oberseite hat, die mit einer Mehrzahl von Trennwänden (12), die strahlenförmig angeordnet sind, und einer Mehrzahl von anionischen Wasserströmungswegen (121), die zwischen den Trennwänden angeordnet sind, versehen ist;
die Basis mit einem leitenden Abstandsrohr (14), einem das leitende Abstandsrohr umgebenden ersten Abstandsring (15) und einem den ersten Abstandsring umgebenden zweiten Abstandsring (16) versehen ist;
die Basis mit einer Mehrzahl von ersten Abstandsrippen (151), die zwischen dem ersten Abstandsring und dem leitenden Abstandsrohr angeordnet sind und eine Mehrzahl von Wasserzufuhreinlasswegen (152) in dem ersten Abstandsring bilden, und einer Mehrzahl von zweiten Abstandsrippen (161) versehen ist, die zwischen dem zweiten Abstandsring und dem ersten Abstandsring angeordnet sind und eine Mehrzahl von Auslasswegen (162) für anionisches Wasser in dem zweiten Abstandsring bilden;
der zweite Abstandsring mit einer Mehrzahl von Auslassöffnungen (163) für anionisches Wasser versehen ist, die den Strömungswegen für anionisches Wasser entsprechen; und
die Auslasswege für anionisches Wasser einen Boden haben, der mit einer Mehrzahl von Auslassöffnungen (164) für anionisches Wasser versehen ist.

3. Vorrichtung zum Vermischen von Wasserstoffmolekülen nach Anspruch 1, wobei:
die Oberseite der Basis mit einem Ringflansch (17) versehen ist, der die Trennwände umgibt, und eine Verbindungsnut (171) zwischen einer Innenwand der Basis und dem Ringflansch zum Verbinden der ersten Gas- und Wasserleitscheibe ausgebildet ist;
die erste Gas- und Wasserleitscheibe eine Außenwand aufweist, die mit einer Ringnut (37) versehen ist, welche der Verbindungsnut der Basis entspricht; und
ein O-Ring (Q) zwischen der Verbindungsnut der Basis und der Ringnut der ersten Gas- und Wasserleitscheibe zusammengedrückt ist.

4. Vorrichtung zum Vermischen von Wasserstoffmolekülen nach Anspruch 1, wobei:
die Basis mit einem Befestigungsvorsprung (11) versehen ist, der sich nach unten erstreckt;
der Befestigungsvorsprung der Basis mit mindestens einem Zapfen (112) versehen ist;
der Verbinder mit einer Befestigungsvertiefung (92) versehen ist, die an dem Befestigungsvorsprung der Basis angebracht ist; und
die Befestigungsvertiefung des Verbinders mit mindestens einem Zapfenloch (93) versehen ist, das an dem Zapfen des Befestigungsvorsprungs fixiert ist.

5. Vorrichtung zum Vermischen von Wasserstoffmolekülen nach Anspruch 1, wobei die Basis mit einem Außengewinde (18) versehen ist und die Abdeckung mit einem Innengewinde (81) versehen ist, das auf das Außengewinde der Basis aufgeschraubt ist.

6. Vorrichtung zum Vermischen von Wasserstoffmolekülen nach Anspruch 1, wobei die Anode einen Umfang hat, der mit mehreren ersten Positionierungsabschnitten (44) versehen ist, und die Kathode einen Umfang hat, der mit mehreren zweiten Positionierungsabschnitten (64) versehen ist, die an dem ersten Positionierungsabschnitten der Anode angeordnet sind, um die Anodenhohlräume der Anode mit den Kathodenhohlräumen der Kathode auszurichten.

7. Vorrichtung zum Vermischen von Wasserstoffmolekülen nach Anspruch 1, wobei:
die lonenmembran ein Protonenaustauschfilm ist und einen Durchmesser hat, der größer als derjenige der Anode und derjenige der Kathode ist;
die erste Gas- und Wasserleitscheibe mit einem vorstehenden Ring (362) versehen ist;
die zweite Gas- und Wasserleitscheibe mit einem Schlitz (72) versehen ist, der an dem vorstehenden Ring der ersten Gas- und Wasserleitscheibe angebracht ist; und
ein O-Ring zwischen dem vorstehenden Ring der ersten Gas- und Wasserleitscheibe und dem Schlitz der zweiten Gas- und Wasserleitscheibe zusammengedrückt ist.

8. Vorrichtung zum Vermischen von Wasserstoffmolekülen nach Anspruch 1, wobei die erste Gas- und Wasserleitscheibe einen Umfang aufweist, der mit einer Mehrzahl von Positionierungsschlitzen (35) versehen ist, und die zweite Gas- und Wasserleitscheibe einen Umfang aufweist, der mit einer Mehrzahl von Positionierungseinsätzen (71) versehen ist, die in die Positionierungsschlitze der ersten Gas- und Wasserleitscheibe eingesetzt sind.

9. Vorrichtung zum Vermischen von Wasserstoffmolekülen nach Anspruch 1, wobei:
ein elektrischer Leiter (20) an der Kathode angebracht und mit der Basis verbunden ist;
der elektrische Leiter ein unteres Ende hat, das mit einem leitenden Abschnitt (26) versehen ist, der in einem leitenden Abstandsrohr (14) der Basis angebracht ist;
die Basis mit zwei Durchgangslöchern (13) versehen ist;
die Anode mit zwei positiv leitenden Abschnitten (45) versehen ist, die sich durch die zwei Durchgangslöcher der Basis erstrecken;
der Verbinder mit einer hohlen Säule (91) versehen ist, die dem leitenden Abstandsrohr der Basis entspricht;
eine negativ leitende Welle (98) beweglich in der hohlen Säule angebracht und mit einem Minusleiter verbunden ist;
ein elastisches Element (S) in der hohlen Säule angebracht und zwischen der hohlen Säule und der negativ leitenden Welle vorgespannt ist, um die negativ leitende Welle zu drücken, um den leitenden Abschnitt des elektrischen Leiters eng zu kontaktieren; und
der Verbinder mit zwei elastischen positiv leitenden Klingen (99) versehen ist, die den zwei positiv leitenden Abschnitten der Anode entsprechen und mit einem Plusleiter verbunden sind.

10. Vorrichtung zum Vermischen von Wasserstoffmolekülen nach Anspruch 1, wobei die Anodenhohlräume der Anode und die Kathodenhohlräume der Kathode eine V-förmige Ausgestaltung aufweisen.

11. Vorrichtung zum Vermischen von Wasserstoffmolekülen nach Anspruch 1, wobei:
die Anodenhohlräume der Anode und die Kathodenhohlräume der Kathode mehrere Löcher aufweisen;
die erste Gas- und Wasserleitscheibe mit mehreren ersten Abstandsteilen (341), die den Anodenhohlräumen der Anode entsprechen, und mit mehreren anionischen Wasserströmungskanälen (342) versehen ist, die zwischen den ersten Abstandsteilen angeordnet sind;
die ersten Distanzteile strahlenförmig angeordnet sind;
die zweite Gas- und Wasserleitscheibe mit mehreren zweiten Abstandsteilen (741), die den Kathodenhohlräumen der Kathode entsprechen, und mit mehreren kationischen Wasserströmungskanälen (742) versehen ist, die zwischen den zweiten Abstandsteilen angeordnet sind; und
die zweiten Abstandsteile strahlenförmig angeordnet sind.

12. Vorrichtung zum Vermischen von Wasserstoffmolekülen nach Anspruch 1, wobei:
die erste Gas- und Wasserleitscheibe mit einem ersten Wasserzufuhreinlasskanal (34) versehen ist, der den ersten Wassereinlassöffnungen der Anode entspricht;
die zweite Gas- und Wasserleitscheibe mit einem zweiten Wasserzufuhreinlasskanal (74) versehen ist, der den zweiten Wassereinlassöffnungen der Kathode entspricht;
die erste Gas- und Wasserleitscheibe mit einer Mehrzahl von Auslassöffnungen (36) für anionisches Wasser und einer Mehrzahl von Auslasskanälen (361) für anionisches Wasser versehen ist;
die zweite Gas- und Wasserleitscheibe mit mehreren kationischen Wasserauslassöffnungen (75) und mehreren kationischen Wasserauslasskanälen (76) versehen ist;
wobei die Vorrichtung dazu geeignet ist, dass:
das zugeführte Wasser durch die ersten Wassereinlassöffnungen der Anode in den ersten Wasserzufuhreinlasskanal der ersten Gas- und Wasserleitscheibe strömt und von den ersten Wassereinlassöffnungen der Anode in die Anodenhohlräume der Anode strahlenförmig strömt und schließlich aus den Auslaßkanälen für anionisches Wasser und den Auslaßkanälen für anionisches Wasser der ersten Gas- und Wasserleitscheibe herausfließt; und
das zugeführte Wasser durch die zweiten Wassereinlassöffnungen der Kathode in den zweiten Wasserzufuhreinlasskanal der zweiten Gas- und Wasserleitscheibe strömt und von den zweiten Wassereinlassöffnungen der Kathode nach außen in die Kathodenhohlräume der Kathode strahlenförmig strömt und schließlich aus den kationischen Wasserauslasskanälen und den kationischen Wasserauslassöffnungen der zweiten Gas- und Wasserleitscheibe herausfließt.

13. Vorrichtung zum Vermischen von Wasserstoffmolekülen nach Anspruch 12, wobei die erste Gas- und Wasserleitscheibe mit einer ringförmigen Anschlagkante (39) versehen ist, die der Basis entspricht und den Sammel- und Führungsraum zwischen der Basis und der ersten Gas- und Wasserleitscheibe bildet, um die Sauerstoffmoleküle und Ozon zu sammeln und das anionische Wasser zu führen.

14. Vorrichtung zum Vermischen von Wasserstoffmolekülen nach Anspruch 12, wobei die erste Gas- und Wasserleitscheibe mit einem ringförmigen Vorsprung (38) versehen ist, der den Auslassöffnungen für anionisches Wasser entspricht.

15. Verfahren zum Vermischen von Wasserstoffmolekülen, aufweisend:
Führen von zugeführtem Wasser jeweils durch erste Wassereinlassöffnungen einer Anode und zweite Wassereinlassöffnungen einer Kathode in Anodenhohlräume der Anode und Kathodenhohlräume der Kathode;
Elektrolyse des zugeführten Wassers in den Anodenhohlräumen der Anode zur Bildung von Sauerstoffmolekülen, Ozon und anionischem Wasser, und Elektrolyse des zugeführten Wassers in den Kathodenhohlräumen der Kathode zur Bildung von Wasserstoffmolekülen und kationischem Wasser;
Vorsehen einer lonenmembran zwischen der Anode und der Kathode, um zu verhindern, dass die Sauerstoffmoleküle in das kationische Wasser gemischt werden;
Führen des anionischen Wassers, das die Sauerstoffmoleküle und Ozon aus den Anodenhohlräumen der Anode transportiert, in eine erste Sammel- und Führungskammer einer ersten Gas- und Wasserleitscheibe; und
Führen des kationischen Wassers, das die Wasserstoffmoleküle aus den Kathodenhohlräumen der Kathode transportiert, in zweite Sammel- und Führungskammern einer zweiten Gas- und Wasserleitscheibe, wobei die Wasserstoffmoleküle und das kationische Wasser in den zweiten Sammel- und Führungskammern eine Mischreaktion hervorrufen, Erzwingen, dass mehr Wasserstoffmoleküle wieder in dem kationischen Wasser gelöst werden, um eine Konzentration der Wasserstoffmoleküle in dem kationischen Wasser zu erhöhen;
wobei das Verfahren in der Vorrichtung nach einem der Ansprüche 1 bis 14 durchgeführt wird.

## Revendications

1. Dispositif de remélange de molécules d'hydrogène comprenant:
une base (10);
un premier disque de canalisation de gaz et eau (30) situé au-dessus de la base;
une anode (40) située au-dessus du premier disque de canalisation de gaz et eau;
une cathode (60) située au-dessus de l'anode;
une membrane ionique (50) située entre l'anode et la cathode;
un deuxième disque de canalisation de gaz et eau (70) situé au-dessus de la cathode;
une couverture (80) combinée avec la base et située au-dessus du deuxième disque de canalisation de gaz et eau;
un connecteur de sortie d'eau cationique (85) s'étendant vers le haut à partir de la couverture; et
un connecteur (90) s'étendant vers le bas à partir de la base;
où:
le premier disque de canalisation de gaz et eau est pourvu d'une première chambre de collecte et guidage (391) correspondant à la base;
le deuxième disque de canalisation de gaz et eau est pourvu d'une pluralité de deuxièmes chambres de collecte et guidage (78) correspondant à la couverture (80);
l'anode est pourvue d'une pluralité de premiers orifices d'entrée d'eau (43) et une pluralité de cavités anodiques (42);
les cavités anodiques sont arrangées de façon rayonnante;
la cathode est pourvue d'une pluralité de deuxièmes orifices d'entrée d'eau (63) et une pluralité de cavités cathodiques (62);
les cavités cathodiques sont arrangées de façon rayonnante;
le connecteur est pourvu d'un joint d'entrée d'eau de source (97) et un joint de sortie d'eau anionique (96);
où le dispositif est adapté pour:
guider l'eau de source respectivement à travers les premiers orifices d'entrée d'eau de l'anode et les deuxièmes orifices d'entrée d'eau de la cathode dans les cavités anodiques de l'anode et les cavités cathodiques de la cathode;
électrolyser l'eau de source dans les cavités anodiques de l'anode pour former des molécules d'oxygène, ozone et eau anionique, et dans les cavités cathodiques de la cathode pour former des molécules d'hydrogène et eau cationique;
porter les molécules d'oxygène et ozone dans les cavités anodiques de l'anode par l'eau anionique dans la première chambre de collecte et guidage du premier disque de canalisation de gaz et eau ; et
porter les molécules d'hydrogène dans les cavités cathodiques de la cathode par l'eau cationique dans les deuxièmes chambres de collecte et guidage du deuxième disque de canalisation de gaz et eau, de sorte que les molécules d'hydrogène et l'eau cationique produisent une réaction de mélange dans les deuxièmes chambres de collecte et guidage, et davantage de molécules d'hydrogène sont dissoutes dans l'eau cationique, pour augmenter une concentration des molécules d'hydrogène dans l'eau cationique;
où en outre:
la couverture est pourvue d'une pluralité de premiers rebords d'arrêt (82) formant une pluralité de chambres de dissolution d'hydrogène (83) dans la couverture;
le deuxième disque de canalisation de gaz et eau est pourvu d'une pluralité de deuxièmes rebords d'arrêt (77) formant les deuxièmes chambres de collecte et guidage dans le deuxième disque de canalisation de gaz et eau;
chacun des premiers rebords d'arrêt de la couverture est pourvu d'une pluralité de premières ouvertures (84) pour collecter les molécules d'hydrogène et guider l'eau cationique;
chacun des deuxièmes rebords d'arrêt du deuxième disque de canalisation de gaz et eau est pourvu d'une pluralité de deuxièmes ouvertures (79) pour collecter les molécules d'hydrogène et guider l'eau cationique; et
où le dispositif est adapté pour déplacer l'eau cationique vers le haut et vers le bas dans les deuxièmes chambres de collecte et guidage du deuxième disque de canalisation de gaz et eau et les chambres de dissolution d'hydrogène de la couverture pour présenter un flux en forme de S successif.

2. Dispositif de remélange de molécules d'hydrogène de la revendication 1, où:
la base a une partie supérieure pourvue d'une pluralité d'éléments de partage (12) qui sont arrangés de façon rayonnante, et une pluralité de parcours de flux d'eau anionique (121) situés entre les éléments de partage;
la base est pourvue d'un tuyau d'espacement conducteur (14), un premier anneau d'espacement (15) entourant le tuyau d'espacement conducteur, et un deuxième anneau d'espacement (16) entourant le premier anneau d'espacement;
la base est pourvue d'une pluralité de premières nervures d'espacement (151) situées entre le premier anneau d'espacement et le tuyau d'espacement conducteur et formant une pluralité de parcours d'entrée d'eau de source (152) dans le premier anneau d'espacement, et une pluralité de deuxièmes nervures d'espacement (161) situées entre le deuxième anneau d'espacement et le premier anneau d'espacement et formant une pluralité de parcours de sortie d'eau anionique (162) dans le deuxième anneau d'espacement;
le deuxième anneau d'espacement est pourvu d'une pluralité d'orifices de sortie d'eau anionique (163) correspondant aux parcours de flux d'eau anionique; et
les parcours de sortie d'eau anionique ont un fond pourvu d'une pluralité de trous de sortie d'eau anionique (164).

3. Dispositif de remélange de molécules d'hydrogène de la revendication 1, où:
la partie supérieure de la base est pourvue d'un rebord annulaire (17) entourant les éléments de partage, et une rainure de connexion (171) est formée entre une paroi intérieure de la base et le rebord annulaire pour connecter le premier disque de canalisation de gaz et eau;
le premier disque de canalisation de gaz et eau a une paroi extérieure pourvue d'une rainure annulaire (37) correspondant à la rainure de connexion de la base; et
un joint torique (Q) est comprimé entre la rainure de connexion de la base et la rainure annulaire du premier disque de canalisation de gaz et eau.

4. Dispositif de remélange de molécules d'hydrogène de la revendication 1, où:
la base est pourvue d'une saillie de montage (11) s'étendant vers le bas;
la saillie de montage de la base est pourvue d'au moins un tenon (112);
le connecteur est pourvu d'un enfoncement de montage (92) monté sur la saillie de montage de la base; et
l'enfoncement de montage du connecteur est pourvu d'au moins une mortaise (93) bloquée sur le tenon de la saillie de montage.

5. Dispositif de remélange de molécules d'hydrogène de la revendication 1, où la base est pourvue d'un filetage extérieur (18), et la couverture est pourvue d'un filetage intérieur (81) vissé sur le filetage extérieur de la base.

6. Dispositif de remélange de molécules d'hydrogène de la revendication 1, où l'anode a une périphérie pourvue d'une pluralité de premières portions de positionnement (44), et la cathode a une périphérie pourvue d'une pluralité de deuxièmes portions de positionnement (64) situées sur les premières portions de positionnement de l'anode pour aligner les cavités anodiques de l'anode avec les cavités cathodiques de la cathode.

7. Dispositif de remélange de molécules d'hydrogène de la revendication 1, où:
la membrane ionique est une pellicule d'échange de protons et a un diamètre supérieur à celui de l'anode et celui de la cathode;
le premier disque de canalisation de gaz et eau est pourvu d'un anneau saillant (362);
le deuxième disque de canalisation de gaz et eau est pourvu d'une fente (72) montée sur l'anneau saillant du premier disque de canalisation de gaz et eau ; et
un joint torique est comprimé entre l'anneau saillant du premier disque de canalisation de gaz et eau et la fente du deuxième disque de canalisation de gaz et eau.

8. Dispositif de remélange de molécules d'hydrogène de la revendication 1, où le premier disque de canalisation de gaz et eau a une périphérie pourvue d'une pluralité de fentes de position (35), et le deuxième disque de canalisation de gaz et eau a une périphérie pourvue d'une pluralité d'insertions de position (71) insérées dans les fentes de position du premier disque de canalisation de gaz et eau.

9. Dispositif de remélange de molécules d'hydrogène de la revendication 1, où:
un conducteur électrique (20) est monté sur la cathode et connecté avec la base;
le conducteur électrique a une extrémité inférieure pourvue d'une portion conductrice (26) montée dans un tuyau d'espacement conducteur (14) de la base;
la base est pourvue de deux trous de passage 13;
l'anode est pourvue de deux portions conductrices positives (45) s'étendant à travers le deux trous de passage de la base;
le connecteur est pourvu d'un pilier creux (91) correspondant au tuyau d'espacement conducteur de la base;
un arbre conducteur négatif (98) est monté de façon mobile dans le pilier creux et connecté à un fil négatif;
un élément élastique (S) est monté dans le pilier creux et penché entre le pilier creux et l'arbre conducteur négatif pour pousser l'arbre conducteur négatif étroitement en contact avec la portion conductrice du conducteur électrique; et
le connecteur est pourvu de deux lames conductrices positives élastiques (99) correspondant aux deux portions conductrices positives de l'anode et connectées à un fil positif.

10. Dispositif de remélange de molécules d'hydrogène de la revendication 1, où les cavités anodiques de l'anode et les cavités cathodiques de la cathode ont une configuration en forme de V.

11. Dispositif de remélange de molécules d'hydrogène de la revendication 1, où:
les cavités anodiques de l'anode et les cavités cathodiques de la cathode comprennent des trous multiples;
le premier disque de canalisation de gaz et eau est pourvu d'une pluralité de premières pièces d'espacement (341) correspondant aux cavités anodiques de l'anode, et une pluralité de canaux de flux d'eau anionique (342) situés entre les premières pièces d'espacement;
les premières pièces d'espacement sont arrangées de façon rayonnante;
le deuxième disque de canalisation de gaz et eau est pourvu d'une pluralité de deuxièmes pièces d'espacement (741) correspondant aux cavités cathodiques de la cathode, et une pluralité de canaux de flux d'eau cationique (742) situés entre les deuxièmes pièces d'espacement; et
les deuxièmes pièces d'espacement sont arrangées de façon rayonnante.

12. Dispositif de remélange de molécules d'hydrogène de la revendication 1, où:
le premier disque de canalisation de gaz et eau est pourvu d'un premier passage d'entrée d'eau de source (34) correspondant aux premiers orifices d'entrée d'eau de l'anode;
le deuxième disque de canalisation de gaz et eau est pourvu d'un deuxième passage d'entrée d'eau de source (74) correspondant aux deuxièmes orifices d'entrée d'eau de la cathode;
le premier disque de canalisation de gaz et eau est pourvu d'une pluralité d'orifices de sortie d'eau anionique (36) et une pluralité de canaux de sortie d'eau anionique (361);
le deuxième disque de canalisation de gaz et eau est pourvu d'une pluralité d'orifices de sortie d'eau cationique (75) et une pluralité de canaux de sortie d'eau cationique (76);
où le dispositif est adapté de façon que:
l'eau de source coule à travers les premiers orifices d'entrée d'eau de l'anode dans le premier passage d'entrée d'eau de source du premier disque de canalisation de gaz et eau, et coule des premiers orifices d'entrée d'eau de l'anode dans les cavités anodiques de l'anode de façon rayonnante, et enfin coule hors des canaux de sortie d'eau anionique et des orifices de sortie d'eau anionique du premier disque de canalisation de gaz et eau; et
l'eau de source coule à travers les deuxièmes orifices d'entrée d'eau de la cathode dans le deuxième passage d'entrée d'eau de source du deuxième disque de canalisation de gaz et eau, et coule vers l'extérieur des deuxièmes orifices d'entrée d'eau de la cathode dans les cavités cathodiques de la cathode de façon rayonnante, et enfin coule hors des canaux de sortie d'eau cationique et des orifices de sortie d'eau cationique du deuxième disque de canalisation de gaz et eau.

13. Dispositif de remélange de molécules d'hydrogène de la revendication 12, où le premier disque de canalisation de gaz et eau est pourvu d'un bord d'arrêt annulaire (39) correspondant à la base et formant l'espace de collecte et guidage entre la base et le premier disque de canalisation de gaz et eau, pour collecter les molécules d'oxygène et ozone et guider l'eau anionique.

14. Dispositif de remélange de molécules d'hydrogène de la revendication 12, où le premier disque de canalisation de gaz et eau est pourvu d'une projection annulaire (38) correspondant aux orifices de sortie d'eau anionique.

15. Méthode de remélange de molécules d'hydrogène comprenant:
guider l'eau de source respectivement à travers des premiers orifices d'entrée d'eau d'une anode et des deuxièmes orifices d'entrée d'eau d'une cathode dans des cavités anodiques de l'anode et des cavités cathodiques de la cathode;
électrolyser l'eau de source dans les cavités anodiques de l'anode pour former des molécules d'oxygène, ozone et eau anionique, et électrolyser l'eau de source dans les cavités cathodiques de la cathode pour former des molécules d'hydrogène et eau cationique;
fournir une membrane ionique entre l'anode et la cathode pour empêcher que les molécules d'oxygène soient mélangées dans l'eau cationique ;
guider l'eau anionique portant les molécules d'oxygène et ozone des cavités anodiques de l'anode dans une première chambre de collecte et guidage d'un premier disque de canalisation de gaz et eau; et
guider l'eau cationique portant les molécules d'hydrogène des cavités cathodiques de la cathode dans des deuxièmes chambres de collecte et guidage d'un deuxième disque de canalisation de gaz et eau, avec les molécules d'hydrogène et l'eau cationique produisant une réaction de mélange dans les deuxièmes chambres de collecte et guidage, faisant dissoudre à nouveau davantage de molécules d'hydrogène dans l'eau cationique, pour augmenter une concentration des molécules d'hydrogène dans l'eau cationique;
où la méthode est effectuée dans le dispositif de l'une quelconque des revendications 1 à 14.
